# EUROPÄISCHE PATENTSCHRIFT

(11) **EP 1 925 470 B1**
(45) Veröffentlichungstag und Bekanntmachung des Hinweises auf die Patenterteilung: **14.09.2011**
(21) Anmeldenummer: 07112586.8
(22) Anmeldetag: 17.07.2007
(51) Int. Cl.: B60G 7/00, B60G 21/055

(54) **Radaufhängung**
Wheel suspension
Suspension de roue

(30) Priorität: 24.11.2006 DE 102006055565
(43) Veröffentlichungstag der Anmeldung: 28.05.2008
(73) Patentinhaber: Ford Global Technologies, LLC, Dearborn, MI 48126 (US)
(72) Erfinder: Halfmann, Edmund, 41468 Neuss (DE); Weshendorff, Joerg, 58452 Witten (DE)
(74) Vertreter: Dörfler, Thomas

(56) Entgegenhaltungen:
- JP-A- 7 257 423
- JP-A- 2002 235 722
- US-A- 3 819 202
- US-A1- 2005 212 244
- US-B1- 6 471 224
- US-B1- 6 478 318

## Beschreibung

Die Erfindung betrifft eine Radaufhängung nach dem Oberbegriff des Anspruchs 1, wobei die Radaufhängung zumindest einen Querlenker und einen Radträger aufweist, wobei der Radträger ein von einem Bolzen durchgriffenes Anbindungselement zur Verbindung mit dem Querlenker aufweist. Ein Beispiel einer solchen Radanfhängung ist aus der JP 07 257 423 A bekannt.

Derartige Radaufhängungen sind bekannt, wobei z. B. ein Federlenker als Querlenker mit seinem Anbindungsende mit dem Radträger verbunden wird. Hierzu ist der Radträger an seinem Anbindungselement beispielhaft gabelförmig ausgeführt, wobei in seinen Gabelschenkeln jeweils Bohrungen angeordnet sind, durch die ein Schraubenbolzen gesteckt wird. Der Schraubenbolzen überragt die Gabelschenkel jeweils, so dass auf die vorstehenden freien Enden eine Mutter aufschraubbar ist, so dass der Federlenker durch Verschraubung der Muttern auf dem jeweils vorstehenden freien Ende des Schraubenbolzens zwischen beiden Gabelschenkeln hinreichend befestigt bzw. eingeklemmt wird.

Als ein Hauptnachteil dieser bekannten Radaufhängung ist anzusehen, dass die Anbindung des beispielhaft genannten Federlenkers an dem Radträger durch das Einstecken des Bolzens und dem beidseitigen Verschrauben äußerst zeit- und kostenintensiv ist, wobei eine Vielzahl von Bauteilen verwendet wird.

Die DE 101 08 686 A1 betrifft eine Befestigungsanordnung eines kardanisch schwenkbaren ersten Bauteils eines Kraftfahrzeuges, insbesondere eines Teleskop-Stoßdämpfers an einem zweiten Bauteil mit einer definierten Befestigungsebene, insbesondere einem Lenker einer Radaufhängung des Kraftfahrzeuges. Das erste Bauteil ist über ein Befestigungsauge und ein Gummi-Metall-Hülsenlager mit einem Lagerbolzen und daran angeformten Befestigungslappen an dem zweiten Bauteil befestigbar. Die Befestigungslappen sind zur Kompensation einer schräg zur Lagermittelachse verlaufenden Befestigungsebene asymmetrisch zum Lagerbolzen ausgerichtet.

Die DE 197 20 639 A1 offenbart ebenfalls eine Lageranordnung für ein schwenkbares Bauteil, insbesondere für einen Lenker einer Radaufhängung für Kraftfahrzeuge, mit einer bauteilseitigen Lagerhülse, einem die Lagerhülse durchragenden, endseitige Befestigungsstellen aufweisenden Lagerbolzen und einem dazwischen liegenden, gummielastischen Lagerelement. Zumindest eine der endseitigen Befestigungsstellen ist eine in die Lagerbolzen einragende Schraube mit einem augenförmigen Kopf.

Aus der DE 38 03 802 ist eine Radaufhängung für eine angetriebene Vorderachse eines Kraftfahrzeuges mit einem aufbauseitig gehaltenen Stabilisator bekannt, der über ein Gelenk mit einem Gehänge und über ein weiteres Gelenk mit einem Radträger verbunden ist. Das Gehänge besteht aus einem gebogen ausgebildeten Arm, der zwischen den Gelenken einen Freiraum für eine quer verlaufende Rad-Antriebswelle umfasst, die in Hoch- und Längsrichtung im Abstand zum Arm verläuft. Der Arm ist in Fahrzeuglängsrichtung angestellt. Das radträgerseitige Gelenk liegt oberhalb der Raddrehachse in einer durch ein oberes Federbeinstützlager und ein unteres Querlenkerlager gebildeten Lenkachse.

Die DE 39 09 942 A1 offenbart eine Radaufhängung für die Vorderräder eines Kraftfahrzeuges mit an einem Radträger angelenktem oberen und unteren Querlenker und einem Federdämpferelement, welches mit dem oberen Querlenker verbunden ist und sich am Fahrzeugaufbau abstützt. Das Federdämpferelement ist zwischen dem oberen und dem unteren Querlenker an einem Lagerhebel in einem Lager abgestützt. Der Lagerhebel ist schwenkbar an einem Querlenker gehalten und über einen aufbauseitig gelagerten Steuerhebel geführt.

Aus der EP 0 312 711 B1 ist eine Radaufhängung für ein Kraftfahrzeug, insbesondere eine Querlenkerachse mit einem Dämpfer- bzw. Federbein bekannt, das aufbauseitig abgestützt und mit einem oberen Querlenker verbunden ist, wobei zwischen dem Radträger und dem oberen Querlenker ein Zwischenglied angeordnet und fest mit dem Dämpfer- bzw. Federbein verbunden ist. Einerseits ist zwischen dem Zwischenglied und dem Radträger ein Gelenk angeordnet, wobei andererseits zwischen dem Zwischenglied und dem Querlenker eine Lagerung angeordnet ist. Das Gelenk und die Lagerung sind zur Dämpfer- bzw. Federbeinachse beabstandet etwa in einer Ebene angeordnet, wobei die Ebene etwa senkrecht zur Dämpfer- bzw. Federbeinachse liegt.

Die US 3,819,202 befasst sich mit einem Aufhängungssystem eines Kraftfahrzeuges mit einer Radsturz und Vorspureinstellung.

Die US 4,875,703 und EP 0 312 997 B1 beschäftigen sich mit einer Doppellenkeraufhängung, welche einen Querstabilisator aufweist. Die Radaufhängung umfasst einen Radträger, einen unteren Querlenker und ein Verlängerungselement, das mit einem ersten Ende relativ zu einem oberen Abschnitt des Radträgers beweglich verbunden ist, wobei die Aufhängung zudem einen oberen Querstabilisator und einen Stoßdämpfer umfasst, wobei der Querstabilisator mit dem Verlängerungselement verbunden ist.

Die DE 198 05 810 A1 offenbart ein Verbindungselement zum Verbinden eines Torsionsstabilisators mit einer Komponente einer Fahrzeugradaufhängung, wobei das Verbindungselement Kräfte zwischen dem Torsionsstabilisator und der Komponente überträgt und Winkelbewegungen zwischen diesen zulässt. Eine erste Kugelgelenkanordnung ist mit einer zweiten Kugelgelenkanordnung fest verbunden. Ein erstes Ende der ersten Kugelgelenkanordnung ist mit dem Torsionsstabilisator verbunden, wobei das andere Ende mit dem einen Ende der zweiten Kugelgelenkanordnung fest verbunden ist. Das andere Ende der zweiten Kugelgelenkanordnung ist mit der Komponente der Radaufhängung verbunden.

Die Zusammenfassung der JP 07 257423 A offenbart eine Spureinstellungsvorrichtung zum Einstellen eines Spurwinkels eines Fahrzeuges. Hierbei erstreckt sich ein drehbarer Steuerstab zwischen einem Lenkarm und einem Rahmen. Der Lenkarm ist an einer Radseite befestigt, wobei der Rahmen mit der Karosserie verbunden ist. Eine Montagepositioneinstellvorrichtung zum Einstellen einer relativen Montageposition der Steuerstabes zum Lenkarm ist in einem Bauteil angeordnet, in welchem der Steuerstab und der Lenkarm jeweils drehbar befestigt sind.

Der Erfindung liegt die Aufgabe zugrunde, eine Radaufhängung der eingangs genannten Art mit einfachen Mitteln dahingehend zu verbessern, dass diese kostengünstiger und einfacher, insbesondere Platz sparend herstellbar ist.

Erfindungsgemäß wird die Aufgabe durch eine Radaufhängung mit den Merkmalen des Anspruchs 1 gelöst, wobei das Anbindungselement einen Anschlag, an einem, einem Bolzenkopf zugeordneten Schenkel aufweist, und wobei der Bolzenkopf einen zum Anschlag korrespondierenden Gegenanschlag aufweist.

Durch den mit dem Anschlag zusammenwirkenden Gegenanschlag wird der Bolzen einseitig quasi formschlüssig festgelegt, wodurch der Bolzen mit seinem Bolzenkopf quasi verdrehsicher gelagert ist. Zum Befestigen des Querlenkers an dem Radträger ist es damit vorteilhaft nur noch erforderlich, dass lediglich einseitig eine Schraube auf das entsprechende Bolzenende bzw. Steckende geschraubt werden muss.

Eine formschlüssige Verbindung im Sinne der Erfindung ist eine Verbindung, bei der sich die beiden Verbindungspartner mit einer jeweils zugeordneten Fläche verdrehsicher aneinander legen. Damit der Bolzenkopf an dem zugeordneten Schenkel des Anbindungselementes formschlüssig angelegt werden kann, ist günstigerweise vorgesehen, dass der Bolzenkopf einen an seiner dem Anbindungselement zugeordneten Anlageseite angeordnete Flansch aufweist, an dem der Gegenanschlag angeordnet ist. Der Flansch ist zweckmäßigerweise im Wesentlichen kreisförmig ausgeführt, wobei der Gegenanschlag als Kreisabschnitt aus dem Flansch ausgenommen ist, wobei der Anschlag an dem dem Bolzenkopf zugeordneten Schenkel als kreisabschnittsartige Erhebung ausgeführt ist. Damit weist der Anschlag eine erhabene Basisfläche auf, an der sich eine Gegenbasisfläche des Gegenanschlages anlegt. Natürlich ist es auch möglich, an dem Flansch einen Gegenanschlag anzuordnen, der über die Anlageseite des Flansches in Richtung zum Anbindungselement übersteht, wobei der Anschlag des Anbindungselementes bei dieser Ausgestaltung als kreisabschnittsartige Vertiefung in dem zugeordneten Schenkel des Anbindungselementes angeordnet ist.

Um zu erreichen, dass mit dem Radträger ein weiteres Aufhängungselement der Radaufhängung verbunden werden kann, ist erfindungsgemäß vorgesehen, dass der Bolzen an seinem Bolzenkopf einen Fortsatz aufweist, in dem eine Bohrung zur Aufnahme eines Radträgerendes einer Koppelstrebe angeordnet ist. Die Koppelstrebe kann beispielsweise einen Querstabilisator direkt mit dem Radträger verbinden. Hierzu ist die Koppelstrebe mit ihrem Stabilisatorende mit dem Querstabilisator verbunden, wobei das Radträgerende der Koppelstrebe vorteilhaft an dem Fortsatz angelenkt ist.

Mittels dieser vorteilhaften Ausgestaltung weist der Bolzen somit eine Doppelfunktion auf. In einer ersten Funktion dient der Bolzen zur Befestigung beispielsweise des Federlenkers an dem Radträger. Hierzu wird der Bolzen mit seinem Bolzenkopf bzw. seinem Gegenanschlag in Anlage mit dem Anschlag des zugeordneten Schenkels des Anbindungselementes gebracht, wobei anderseitig auf dem Bolzen lediglich eine einzige Schraube bzw. Schraubenmutter aufzuschrauben ist, so dass der beispielhaft genannte Federlenker hinreichend fest mit dem Radträger verbunden bzw. verklemmt werden kann. Gleichzeitig dient der Bolzen aufgrund der vorteilhaften Ausführung mit seinem Fortsatz zur Aufnahme einer Koppelstrebe um beispielsweise einen Querstabilisator direkt mit dem Radträger zu verbinden. Mit dem Bolzen sind somit zwei Aufhängungselemente der Radaufhängung direkt mit dem Radträger verbindbar, wobei die vorteilhafte Anbindung des Querstabilisators über die Koppelstrebe an dem Radträger eine Vorspurkurve bzw. Raderhebungskurve der Radaufhängung günstig beeinflussen kann. Zudem kann die Koppelstrebe von ihrem Radträgerende zum Stabilisatorende verlaufend geneigt bzw. winklig angeordnet sein. Hierbei kann die Koppelstrebe in Fahrzeuglängsrichtung derart geneigt sein, dass ihr Stabilisatorende näher an einer Fahrzeugfront angeordnet ist als ihr Radträgerende. Zusätzlich kann die Koppelstrebe derart geneigt angeordnet sein, dass ihr Stabilisatorende in Längsrichtung des Fahrzeugs gesehen näher an einer Fahrzeugmittelachse angeordnet ist, als ihr Radträgerende. Die Koppelstrebe verläuft dabei von ihrem in Hochrichtung des Kraftfahrzeuges gesehen unten angeordneten Radträgerende zu ihrem in Hochrichtung gesehen oben angeordneten Stabilisatorende zumindest in einem Raumwinkel. Selbstverständlich kann die Koppelstrebe aber auch einen Querstabilisator direkt mit dem Radträger verbinden, ohne dass die Koppelstrebe einen winklig angeordneten Verlauf von ihrem Radträgerende zu ihrem Stabilisatorende aufweist.

Damit der beispielhaft genannte Federlenker hinreichend fest mit dem Radträger verbunden werden kann, ist zweckmäßigerweise vorgesehen, dass der Bolzen ein zum Bolzenkopf gegenüberliegende Steckende aufweist, an dem ein Außengewinde angeordnet ist. Auf dem Außengewinde ist die einzige Schraubenmutter aufschraubbar, so dass der beispielhaft genannte Federlenker hinreichend fest mit dem Radträger verbindbar bzw. verklemmbar ist.

In einer ersten vorteilhaften Ausgestaltung ist es zweckmäßig im Sinne der Erfindung, wenn der Bolzen von seinem Bolzenkopf in Richtung zu seinem Steckende mit einem durchgehenden Außendurchmesser ausgeführt ist, wobei das Steckende kegelstumpfartig ausgeführt ist. Durch die kegelstumpfartige Ausführung des Steckendes ist sichergestellt, dass der Bolzen relativ leicht in die Bohrungen, welche in den Schenkeln des Anbindungselementes bzw. dem beispielhaft genannten Federlenker angeordnet sind, einführbar ist. Bei dieser Ausgestaltung bewirken die zusammenwirkenden Anschläge und Gegenanschläge eine verdrehsichere Lagerung des Bolzens. insbesondere bei der Verschraubung. Gleichzeitig wird mittels der formschlüssigen Anlage des Bolzenkopfes an dem Anbindungselement erreicht, dass der Fortsatz in einer gewünschten bzw. vorgebbaren Einbaulage zur Koppelstrebe angeordnet ist. Die erforderliche Einbauposition wird durch die Anordnung des Gegenanschlages und des Anschlages vorgegeben.

Der Bolzen kann an seinem Bolzenkopfbereich eine konusförmige Verdickung aufweisen, die sich vom Bolzenkopf in Richtung zu einem Steckende des Bolzens verjüngt. Bei dieser Ausgestaltung wird der Bolzen mit seiner konusförmigen Verdickung bei dem Verschrauben in die Bohrung hineingezogen, so dass quasi ein Kegelsitz zur Verfügung gestellt wird. Dies ist insbesondere dann günstig, wenn bei einer vorhandenen Radaufhängung aus Service bzw. Reparaturgründen der vorhandene Bolzen ersetzt werden muss. Soll zudem bei der vorhandenen Radaufhängung die Vorspur günstig beeinflussbar sein, ist es denkbar, dass der Bolzen in seiner Ausgestaltung mit der konusförmigen Verdickung an seinem Bolzenkopf den oben genannten Fortsatz aufweist, so dass beispielsweise ein Querstabilisator über die Koppelstrebe direkt mit dem Radträger verbindbar ist. Damit der Fortsatz dann in einer vorgegebenen Einbauposition an der Radaufhängung bzw. dem Radträger montiert werden kann, kann der Bolzen natürlich zusätzlich zu der konusförmigen Verdickung auch den Flansch mit dem Gegenanschlag aufweisen, der dann mit dem entsprechenden Anschlag an dem Anbindungselement zusammenwirken kann. Durch die vorteilhafte Anordnung des Fortsatzes, an dem Bolzenkopf kann somit auf eine separate Verbindung beispielsweise auf eine separate schweißtechnische Verbindung eines als Einzelteil ausgeführten Fortsatzes mit dem Radträger bzw. seinem Anbindungselement zur Verbindung der Koppelstrebe mit dem Radträger verzichtet werden.

Der Bolzen kann demnach vorteilhaft in unterschiedlichen Ausgestaltungen ausgeführt sein. Zum einen kann der Bolzen in erfindungsgemäßer Ausführung an seinem Bolzenkopf den Gegenanschlag sowie den einstückig mit dem Bolzen hergestellten Fortsatz aufweisen. Der Bolzen kann an seinem Bolzenkopfbereich aber auch lediglich die konusförmige Verdickung aufweisen, so dass auch hier sichergestellt ist, dass lediglich eine einzige Schraubverbindung zur hinreichenden Festlegung des beispielhaft genannten Federlenkers an dem Radträger notwendig ist. Denkbar ist aber auch eine Kombination der beiden vorgenannten Ausführungsarten, so dass zum einen der Bolzenkopf an seinem Flansch den Gegenanschlag sowie den einstückig mit dem Bolzen bzw. dem Bolzenkopf hergestellten Fortsatz aufweist, wobei gleichzeitig die konusförmige Verdickung im Bolzenkopfbereich vorgesehen werden kann.

Zur Verbindung des beispielhaft genannten Federlenkers mit dem Radträger ist günstigerweise vorgesehen, dass das Anbindungselement gabelartig mit zwei Gabelschenkeln ausgeführt ist, in denen jeweils eine Bohrung eingebracht ist, die von dem Bolzen durchgriffen wird.

Das Anbindungselement ist dabei günstigerweise einstückig mit dem Radträger hergestellt, wobei die beiden Gabelschenkel im Wesentlichen flexibel sind, so dass durch die kraftformschlüssige Verschraubung diese in Richtung zum beispielhaft genannten Federlenker, der zwischen den beiden Gabelschenkeln angeordnet ist, gezogen werden, womit eine hinreichende Festlegung des Federlenkers erreichbar ist. Gleichzeitig kann der Bolzen die vorteilhafte Doppelfunktion aufweisen, um z.B. einen Querstabilisator über eine Koppelstrebe direkt mit dem Radträger zu verbinden. Damit ist die Verbindung des beispielhaft genannten Federlenkers mit dem Radträger und des Querstabilisators über die Koppelstrebe in einem einzigen Bauteil kombiniert. Damit werden im Vergleich zum bekannten Stand der Technik Einbaukosten reduziert, wodurch aber auch ein erforderlicher Einbauraum mit zusätzlichem Material wie beispielsweise Bolzen und Muttern reduziert wird.

Weitere vorteilhafte Ausgestaltungen der Erfindung sind in den Unteransprüchen und der folgenden Figurenbeschreibung offenbart. Es zeigen:
- Fig. 1: eine Radaufhängung mit einem Radträger, einem Querlenker und einem Querstabilisator in einer perspektivischen Ansicht,
- Fig. 2: eine Vergrößerung eines Anbindungselementes des Radträgers,
- Fig. 3: einen Bolzen als Einzelheit in unterschiedlichen Ansichten,
- Fig. 4: die Radaufhängung aus Figur 4 ohne Querlenker, und
- Fig. 5: einen Bolzen als Einzelheit in einer weiteren Ausgestaltung.

In den unterschiedlichen Figuren sind gleiche Teile stets mit denselben Bezugszeichen versehen, so dass diese in der Regel auch nur einmal beschrieben werden.

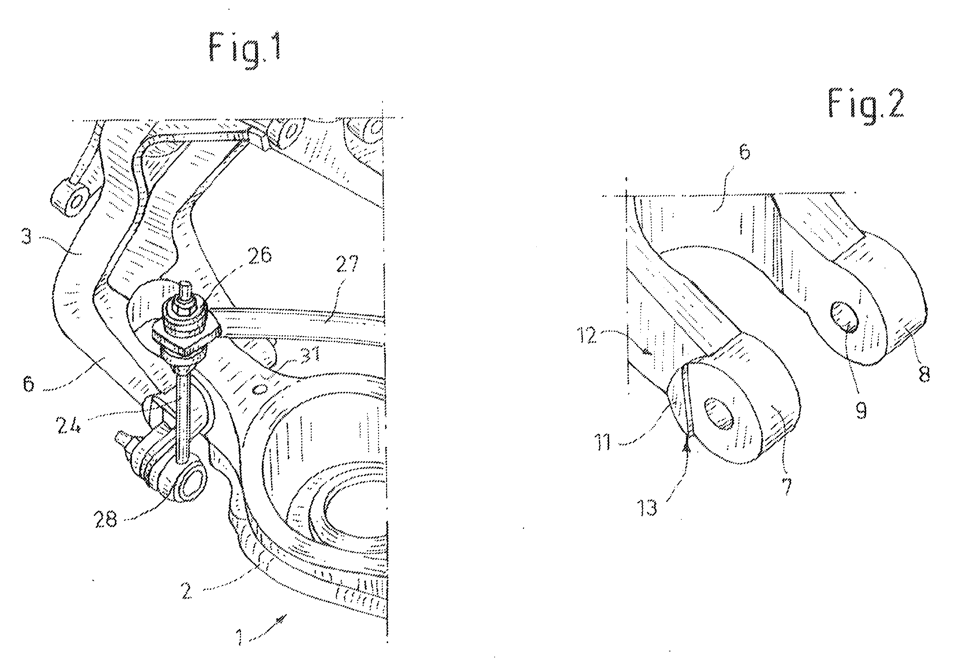

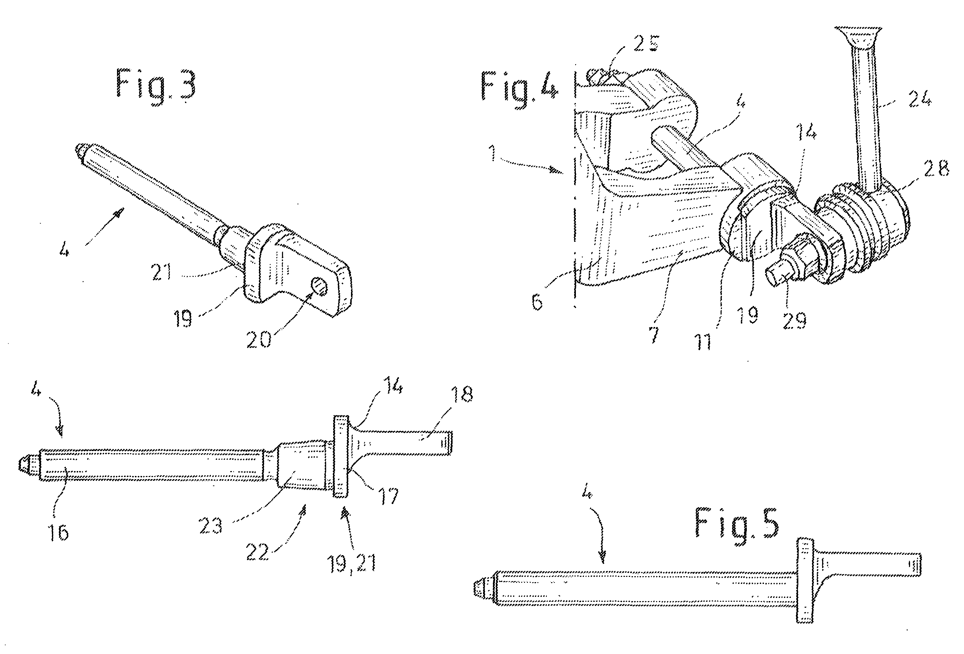

Figur 1 zeigt beispielhaft eine Radaufhängung 1, die zumindest einen Querlenker 2 und einen Radträger 3 aufweist. Der Radträger 3 weist ein von einem Bolzen 4 (Figur 4) durchgriffenes Anbindungselement 6 zur Verbindung mit dem Querlenker 2 auf. Die beispielhaft dargestellte Radaufhängung 1 ist eine Hinterradaufhängung eines nicht dargestellten Kraftfahrzeuges. Weiter sind in der Figur 1 weitere Aufhängungselemente der Radaufhängung 1 aus Übersichtgründen nicht dargestellt.

In dem dargestellten Ausführungsbeispiel ist der Radträger 3 aus einem Gussteil einstückig mit dem Anbindungselement 6 ausgeführt. Der Radträger 3 kann natürlich aus einem Blech geformt sein.

Der Figur 2 ist zu entnehmen, dass das Anbindungselement 6 gabelartig mit zwei Gabelschenkeln 7, 8 ausgeführt ist, in denen jeweils eine Bohrung 9 (Figur 3) eingebracht ist, die von dem Bolzen 4 durchgriffen wird.

An dem in der Zeichnungsebene linken Gabelschenkel 7 weist das Anbindungselement 6 einen Anschlag 11 auf.

Der Anschlag 11 ist als kreisabschnittsartige Erhebung ausgeführt und an einem zum Radträger 3 weisenden Ende 12 angeordnet. Eine Basisfläche 13 des Anschlages 11 verläuft in einer Hochrichtung gesehen senkrecht. Natürlich kann der Anschlag 11 auch in jeder anderen, geeigneten Position an dem Gabelschenkel 7 angeordnet sein, wobei die Basisfläche 13 aber auf jeden Fall zur Bohrung 9 orientiert sein sollte.

Der Anschlag 11 kann natürlich auch als kreisabschnittsartige Vertiefung an dem zugeordneten Gabelschenkel 7 angeordnet sein. Weiter kann der Anschlag 11 natürlich entweder an dem Gabelschenkel 7 oder an dem gegenüberliegenden Gabelschenkel 8 angeordnet sein. Zur Herstellung des Anschlages 11 kann dieser in der Gussform vorgegeben oder mechanisch ausgearbeitet sein.

Der in Figur 3 beispielhaft dargestellte Bolzen 4 weist einen Bolzenkopf 14 und ein dazu gegenüberliegendes Steckende 16 auf. Der Bolzenkopf 14 weist einen Flansch 17 auf, an dem sich ein bevorzugt plattenartiger Fortsatz 18 anschließt. In dem Fortsatz 18 ist eine Bohrung 20 eingebracht.

Der Flansch 17 ist im Wesentlichen kreisförmig ausgeführt, wobei ein kreisabschnittsartig ausgeführter Gegenanschlag 19 aus dem Flansch 17 ausgenommen ist.

Der Gegenanschlag 19 ist korrespondierend zum Anschlag 11 ausgeführt, wobei der Gegenanschlag 19 eine korrespondierend zur Basisfläche 13 des Anschlages 13 ausgebildete Gegenbasisfläche 21 aufweist.

Der Bolzen 4 kann an seinem Bolzenkopfbereich 22 eine konusförmige Verdickung 23 aufweisen, die sich vom Bolzenkopf 14 bzw. dem Flansch 17 in Richtung zu seinem Steckende 16 verjüngt.

An dem Steckende 16 des Bolzens 4 ist ein Außengewinde angeordnet, so dass eine Mutter 25 (Figur 4) auf das Steckende 16 aufschraubbar ist. Das Steckende 16 ist kegelstumpfartig ausgeführt.

In Figur 4 ist die Radaufhängung 1 aus Figur 1 ohne Querlenker 2 dargestellt. Deutlich entnehmbar ist der Figur 4, dass der Bolzen 4 durch die zusammenwirkenden Anschläge 11 bzw. Gegenanschläge 19 verdrehsicher mit seinem Bolzenkopf 14 an dem zugeordneten Gabelschenkel 7 gelagert ist. Damit ist der Fortsatz 18 in einer vorgegebenen Einbauposition an der Radaufhängung 1 bzw. an dem Radträger 3 montierbar, so dass eine Koppelstrebe 24, welche an ihrem Stabilisatorende 26 einen Querstabilisator 27 (Figur 1) trägt, über ihr Radträgerende 28 direkt mit dem Radträger 3 verbindbar ist.

In dem in Figur 4 und Figur 1 dargestellten Ausführungsbeispiel ist dem Radträgerende 28 der Koppelstrebe 24 beispielhaft ein Kugelpfannengelenk mit einem Schraubenbolzen 29 zugeordnet, so dass der Schraubenbolzen 29 durch die Bohrung 20 in dem Fortsatz 18 gesteckt und mit dem Fortsatz 18 kraftformschlüssig verschraubt und somit direkt mit dem Radträger 3 verbunden werden kann.

Durch die vorteilhafte Ausgestaltung weist der Bolzen 4 eine Doppelfunktion auf. Zum einen dient der Bolzen 4 zur hinreichenden Festlegung des beispielhaft dargestellten Querlenkers 2, der in dem dargestellten Ausführungsbeispiel als Federlenker ausgeführt ist, und zum anderen zur Verbindung zum Beispiel des Querstabilisators 27 über die Koppelstrebe 24 mit dem Radträger 3. Durch die Verbindung des Querstabilisators 27 direkt mit dem Radträger 3 kann z.B. eine Vorspurkurve der Radaufhängung 1 günstig beeinflusst werden, wobei auch eine nicht dargestellte winklige Anordnung der Koppelstrebe 24 vorgesehen sein kann.

In Figur 5 ist eine weitere Ausgestaltung des Bolzens 4 dargestellt. Im Unterschied zu dem in Figur 3 dargestellten Ausführungsbeispiel weist der Bolzen 4 nach der Ausgestaltung gemäß Figur 5 keine konusförmige Verdickung auf, sondern einen durchgehenden Außendurchmesser. Ansonsten entspricht der Bolzen 4 der Ausgestaltung nach Figur 5 der Ausgestaltung nach Figur 3.

Zur Montage wird zunächst der Querlenker 2 mit seinem Anbindungsende 31 zwischen die beiden Gabelschenkel 7 und 8 geführt. Anschließend oder gleichzeitig kann der Bolzen 4 durch die Bohrungen 9 gesteckt werden, so dass der Gegenanschlag 19 mit seiner Gegenbasisfläche 21 an dem Anschlag 11 mit seiner Basisfläche 13 anliegt. Die Mutter 25 wird auf das Steckende 16 geschraubt. Hierdurch wird der Querlenker 2 hinreichend fest mit dem Radträger 3 verbunden bzw. von den beiden Gabelschenkeln 7 und 8 eingeklemmt. Weist der Bolzen 4 die konusförmige Verdickung 23 auf, wird diese durch die Verschraubung des Steckendes 16 mit der Mutter 25 in den Gabelschenkel 7 eingezogen, so dass sich quasi ein Kegelsitz ergibt. Anschlag 11 und Gegenanschlag 19 können dabei ebenfalls in Eingriff kommen. An dem Fortsatz 18 kann die Koppelstrebe 24 mit ihrem Radträgerende 28 verbunden werden, in dem der Schraubenbolzen 29 des beispielhaften Kugelpfannenelementes durch die Bohrung 20 in dem Fortsatz gesteckt und verschraubt wird. An dem Stabilisatorende 26 kann der Querstabilisator 27 bereits montiert sein.

Der Bolzen 4 weist somit eine Doppelfunktion auf. Einerseits dient der Bolzen zur Verbindung des Querlenkers 2 mit dem Radträger 3. Andererseits kann an dem Bolzen 4 bzw. seinem bevorzugt einstückig mit diesem hergestellten Fortsatz 16 die Koppelstrebe 24 angelenkt werden. Somit kann an einem einzigen Bauteil, nämlich dem Bolzen 4, eine Verbindung des Querlenkers 2 bzw. des beispielhaften Federlenkers mit dem Radträger 3 und des Querstabilisators 27 über die Koppelstrebe 24 mit dem Radträger 3 kombiniert werden.

## Patentansprüche

1. Radaufhängung, die zumindest einen Querlenker (2) und einen Radträger (3) aufweist, wobei der Radträger (3) ein von einem Bolzen (4) durchgriffenes Anbindungselement (6) zur Verbindung mit dem Querlenker (2) aufweist, wobei das Anbindungselement (6) einen Anschlag (11) an einem, einem Bolzenkopf (14) zugeordneten Schenkel (7) aufweist, und dass der Bolzenkopf (14) einen zum Anschlag (11) korrespondierenden Gegenanschlag (19) aufweist
**dadurch gekennzeichnet, dass**
der Bolzen (4) an seinem Bolzenkopf (14) einen Fortsatz (18) aufweist, an dem eine Bohrung (20) zur Aufnahme eines Radträgerendes (28) einer Koppelstrebe (24) angeordnet ist.

2. Radaufhängung nach Anspruch 1,
**dadurch gekennzeichnet, dass**
der Bolzenkopf (14) einen an seiner dem Anbindungselement (6) zugeordneten Anlageseite angeordneten Flansch (17) aufweist, an dem der Gegenanschlag (19) angeordnet ist.

3. Radaufhängung nach Anspruch 1 oder 2,
**dadurch gekennzeichnet, dass**
der Bolzenkopf (14) einen im Wesentlichen kreisförmig ausgeführten Flansch (17) aufweist, wobei der Gegenanschlag (19) als Kreisabschnitt aus dem Flansch (17) ausgenommen ist, wobei der Anschlag (11) als kreisabschnittsartige Erhebung ausgeführt ist.

4. Radaufhängung nach einem der vorhergehenden Ansprüche,
**dadurch gekennzeichnet, dass**
der Bolzen (4) ein zum Bolzenkopf (14) gegenüberliegendes Steckende (16) aufweist, an dem ein Außengewinde angeordnet ist.

5. Radaufhängung nach einem der vorhergehenden Ansprüche, **dadurch gekennzeichnet, dass**
der Bolzen (4) von seinem Bolzenkopf (14) in Richtung zu seinem Steckende (16) mit einem durchgehenden Außendurchmesser ausgeführt ist, wobei das Steckende (16) kegelstumpfartig ausgeführt ist.

6. Radaufhängung nach einem der vorhergehenden Ansprüche, **dadurch gekennzeichnet, dass**
das Anbindungselement (6) gabelartig mit zwei Gabelschenkeln (7, 8) ausgeführt ist, in denen jeweils eine Bohrung (9) eingebracht ist, die von dem Bolzen (4) durchgriffen wird.

## Claims

1. Wheel suspension, which has at least one transverse link (2) and one wheel carrier (3), the wheel carrier (3) having a connecting element (6), through which a bolt (4) extends, for connecting to the transverse link (2), the connecting element (6) having a stop (11) on a limb (7) which is assigned to a bolt head (14), and the bolt head (14) having a counterstop (19) which corresponds to the stop (11),
**characterized in that**
the bolt (4) has, on its bolt head (14), a projection (18) in which is arranged a bore (20) for receiving a wheel carrier end (28) of a coupling strut (24).

2. Wheel suspension according to Claim 1, **characterized in that**
the bolt head (14) has a flange (17) arranged on its contact side which is assigned to the connecting element (6), on which flange (17) is arranged the counterstop (19).

3. Wheel suspension according to Claim 1 or 2, **characterized in that**
the bolt head (14) has a flange (17) which is of substantially circular design, the counterstop (19) being recessed out of the flange (17) as a circular section, the stop (11) being designed as a circular-section-shaped elevation.

4. Wheel suspension according to one of the preceding claims,
**characterized in that**
the bolt (4) has an insertion end (16) which is situated opposite the bolt head (14) and on which is arranged an external thread.

5. Wheel suspension according to one of the preceding claims,
**characterized in that**
the bolt (4) is formed with a continuous external diameter from its bolt head (14) in the direction of its insertion end (16), the insertion end (16) being of frustoconical design.

6. Wheel suspension according to one of the preceding claims,
**characterized in that**
the connecting element (6) is of fork-shaped design with two fork limbs (7, 8), in which is formed in each case one bore (9) through which the bolt (4) extends.

## Revendications

1. Suspension de roue, qui présente au moins un bras transversal (2) et un support de roue (3), le support de roue (3) présentant un élément de liaison (6) traversé par un boulon (4) pour la connexion au bras transversal (2), l'élément de liaison (6) présentant une butée (11) sur une branche (7) associée à une tête de boulon (14), et la tête de boulon (14) présentant une contre-butée (19) correspondant à la butée (11),
**caractérisée en ce que**
le boulon (4) présente, sur sa tête de boulon (14), une saillie (18), sur laquelle est réalisé un alésage (20) pour recevoir une extrémité de support de roue (28) d'une entretoise de liaison (24).

2. Suspension de roue selon la revendication 1,
**caractérisée en ce que**
la tête de boulon (14) présente une bride (17) disposée sur son côté d'appui associé à l'élément de liaison (6), sur laquelle est disposée la contre-butée (19).

3. Suspension de roue selon la revendication 1 ou 2,
**caractérisée en ce que**
la tête de boulon (14) présente une bride (17) réalisée substantiellement circulaire, la contre-butée (19) étant ressortie en tant que portion de cercle hors de la bride (17), la butée (11) étant réalisée sous forme de rehaussement de type portion de cercle.

4. Suspension de roue selon l'une quelconque des revendications précédentes,
**caractérisée en ce que**
le boulon (4) présente une extrémité d'enfichage (16) opposée à la tête de boulon (14), sur laquelle est réalisé un filetage extérieur.

5. Suspension de roue selon l'une quelconque des revendications précédentes,
**caractérisée en ce que**
le boulon (4) est réalisé depuis sa tête de boulon (14) dans la direction de son extrémité d'enfichage (16) avec un diamètre extérieur continu, l'extrémité d'enfichage (16) étant réalisée sous forme tronconique.

6. Suspension de roue selon l'une quelconque des revendications précédentes,
**caractérisée en ce que**
l'élément de liaison (6) est réalisé sous forme de fourche avec deux branches de fourche (7, 8), dans lesquelles est à chaque fois pratiqué un alésage (9), qui est traversé par le boulon (4).
